# EUROPÄISCHE PATENTANMELDUNG

(11) **EP 1 122 557 A2**
(43) Veröffentlichungstag der Anmeldung: **08.08.2001**
(21) Anmeldenummer: 00124102.5
(22) Anmeldetag: 07.11.2000
(51) Int. Cl.: G01S 17/93

(54) **Vorrichtung zur optischen Überwachung des Umfelds eines Kraftfahrzeugs**

(30) Priorität: 05.02.2000 DE 10005222
(71) Anmelder: Valeo Schalter und Sensoren GmbH, 74321 Bietigheim-Bissingen (DE)
(72) Erfinder: Mathes, Joachim, 74080 Heilbronn (DE)
(74) Vertreter: Dreiss, Fuhlendorf, Steimle & Becker

(57) **Zusammenfassung**

Es wird eine Vorrichtung zur optischen Überwachung des Umfeldes (3) eines Kraftfahrzeugs (1), mit Sensoren (5, 7), welche die Umgebungshelligkeit örtlich aufgelöst abbilden, vorgeschlagen. Aus den Abbildungen der zueineander beabstandeten Sensoren, wird eine dreidimensionale Abbildung des Umfelds (3) errechnet, so dass Hindernisse (17, 23) zuverlässig detektiert werden. Um die Unempfindlichkeit gegen Störungen zu erhöhen, weist die Vorrichtung eine Lichtquelle (13) mit mindestens einem gerichteten Lichtstrahl (15) auf.

## Beschreibung

Die Erfindung betrifft eine Vorrichtung zur Überwachung des Umfelds eines Kraftfahrzeugs, mit Sensoren zum Ermitteln des Abstands des Kraftfahrzeugs von eventuellen Hindernissen.

Diese bekannten Vorrichtungen zur Überwachung des Umfeldes eines Kraftfahrzeugs arbeiten mit Ultraschallsensoren. Da mit diesen Ultraschallsensoren nur das Vorhandensein eines Hindernisses, nicht aber dessen genaue Position ermittelt werden kann, lösen die bekannten Vorrichtungen entweder zu häufig ein Signal aus, welches das Vorhandensein eines Hindernisses anzeigt oder sie sind nicht empfindlich genug und erkennen ein vorhandenes Hindernis nicht.

Der Erfindung liegt die Aufgabe zugrunde, eine verbesserte Vorrichtung zur Überwachung des Umfelds eines Kraftfahrzeugs bereitzustellen, bei welchem die Detektionsrate von Hindernissen im Umfeld eines Kraftfahrzeugs deutlich verbessert wird.

Diese Aufgabe wird erfindungsgemäß gelöst durch eine Vorrichtung zur optischen Überwachung des Umfelds eines Kraftfahrzeugs, mit Sensoren, welche die Umgebungshelligkeit örtlich aufgelöst abbilden, wobei die Sensoren mit einem Abstand zueinander angeordnet sind, wobei eine Lichtquelle mit mindestens einem gerichteten Lichtstrahl vorhanden ist, die das Umfeld des Kraftfahrzeugs abtastet und wobei ein Rechner zum Berechnen der Position von Hindernissen aus den Bildern der Sensoren vorhanden ist, so dass eventuell vorhandene Hindernisse im Umfeld des Kraftfahrzeugs dreidimensional erfasst werden können und somit eine zuverlässige Aussage darüber möglich ist, ob das Hindernis für das Kraftfahrzeug von Relevanz ist oder nicht. Außerdem wird durch die Abtastung des Umfelds des Kraftfahrzeugs durch mindestens einen gerichteten Lichtstrahl jeweils ein Punkt im Umfeld des Kraftfahrzeugs angeleuchtet. Aus dem von diesem Punkt reflektierten Licht lässt sich weitgehend unabhängig von den Lichtverhältnissen und der Beschaffenheit dieses Punktes dessen genaue Position im Raum berechnen. Dadurch können Hindernisse räumlich aufgelöst detektiert werden.

Bei einer Variante der Erfindung sind die Sensoren "charge-coupled devices" (CCD), so dass die Vorteile dieser beispielsweise von Videokameras bekannten optischen Sensoren auch für die erfindungsgemäße Vorrichtung nutzbar gemacht werden können. Ein Vorteil der CCDs besteht darin, dass sich in Verbindung mit den jeweiligen Koordinaten der Pixel des CCDs ein digitalisiertes Bild berechnen lässt, welches vom Rechner der erfindungsgemäßen Vorrichtung weiterverarbeitet werden kann.

In Ergänzung der Erfindung ist vorgesehen, dass ein optisches System im Strahlengang zwischen Sensor und Umfeld vorhanden ist, so dass die Abbildung des Umfelds im oder auf dem Sensor verbessert und an die Anforderungen der erfindungsgemäßen Vorrichtung adaptiert werden kann.

Bei einer Ergänzung der Erfindung weist die Lichtquelle eine Lochmaske auf, so dass auf einfache Weise einer oder mehrere gerichtete Lichtstrahlen erzeugt werden, die zum Abtasten des Umfelds des Kraftfahrzeugs eingesetzt werden können. Wenn mehrere gerichtete Lichtstrahlen von der Lichtquelle gleichzeitig emittiert werden, kann das Abtasten des Umfelds des Kraftfahrzeugs beschleunigt werden. Wenn die Lochmaske mindestens so viele Löcher, wie Bildpunkte zur Berechnung der Position eines Hindernisses aus den Bildpunkten der Sensoren erforderlich sind, aufweist, können sowohl die Lichtquelle als auch die Lochmaske ortsfest am Kraftfahrzeug angebracht werden und es kann simultan des gesmate Umfeld des Kraftfahrzeugs abgetastet und daraus die Position eventuell vorhandener Hindernisse berechnet werden.

Bei einer anderen Ausgestaltung der Erfindung weist die Lichtquelle einen schrittmotorisch gesteuerten Spiegel auf, der mindestens einen gerichteten Lichtstrahl der Lichtquelle über das Umfeld des Kraftfahrzeug steuert, so dass aufgrund des sequentiellen Abtastens der Umgebung des Kraftfahrzeugs geringere Anforderungen an die Rechenleistung und eventuell auch an die Sensoren gestellt werden.

Bei einer anderen Ausgestaltung der Erfindung emittiert die Lichtquelle gepulstes Licht, so dass durch diese Codierung die Störsicherheit gegenüber fremden Lichtquellen weiter erhöht wird.

Eine weitere Variante der Erfindung sieht vor, dass die Lichtquelle ein Laser, insbesondere ein Infrarot-Laser ist, so dass mit sehr geringer Strahlungsleistung ein sehr gut gerichteter Lichtstrahl emittiert wird und außerdem die Störsicherheit gegenüber Fremdlichtquellen weiter verbessert wird.

Weitere Ausgestaltungen der Erfindung sehen vor, dass die Relevanz von Hindernissen in Abhängigkeit der Fahrtrichtung des Lenkereinschlags und/oder des Beladungszustand des Kraftfahrzeugs bewertet wird, so dass die Detektionsrate von für das Kraftfahrzeug relevanten Hindernissen weiter erhöht wird.

Bei einer Variante der Erfindung, wird ein Signal ausgegeben, wenn ein relevantes Hindernis detektiert wurde, so dass der Fahrer des Kraftfahrzeugs entsprechend reagieren kann. Dabei kann das Signal akustisch oder optisch ausgegeben werden. Es ist auch möglich über ein Display, die räumlichen Verhältnisse im Umfeld des Kraftfahrzeugs abzubilden.

Weitere Vorteile und vorteilhafte Ausgestaltungen der Erfindung sind der nachfolgenden Zeichnung, deren Beschreibung und den Patentansprüchen entnehmbar.

Ein Ausführungsbeispiel des Gegenstands der Erfindung ist in der Zeichnung dargestellt und im Folgenden näher beschrieben. Es zeigen:
- Fig. 1: eine Seitenansicht eines Kraftfahrzeugs,
- Fig. 2: eine Draufsicht eines Kraftfahrzeugs,
- Fig. 3: eine schematische Darstellung eines Ausführungsbeispiels einer erfindungsgemäßen Vorrichtung sowie mehrerer Hindernisse und
- Fig. 4: die Abbildung eines Hindernisses in den optischen Sensoren.

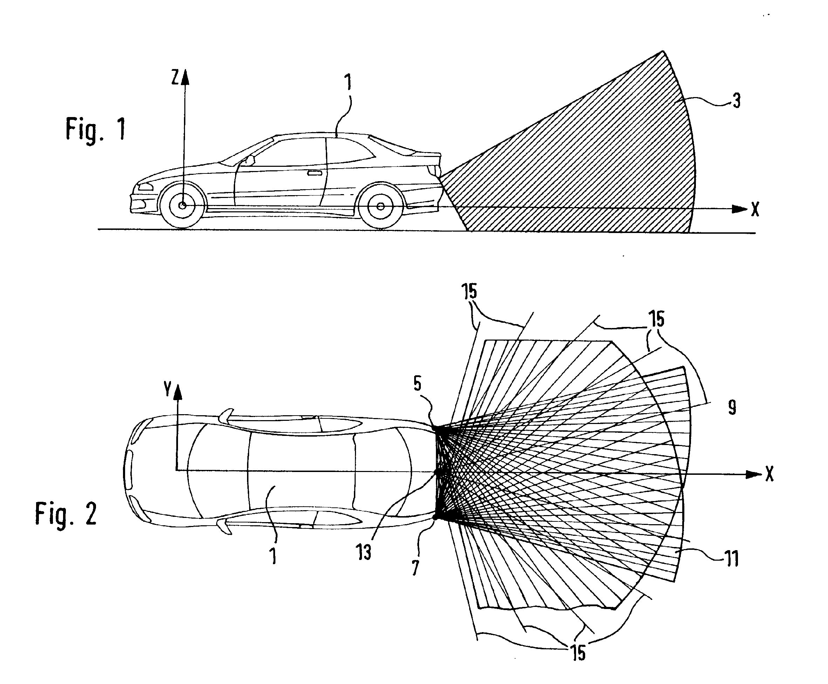

In Fig. 1 ist ein Kraftfahrzeug 1 in einer Seitenansicht dargestellt. Am hinteren Ende des Kraftfahrzeugs 1 befindet sich eine nicht dargestellte erfindungsgemäße Vorrichtung, welche das schraffiert dargestellte Umfeld 3 des Kraftfahrzeugs überwacht. Die Längsachse des Kraftfahrzeugs 1 wird als X-Achse und dessen Hochachse als Z-Achse bezeichnet.

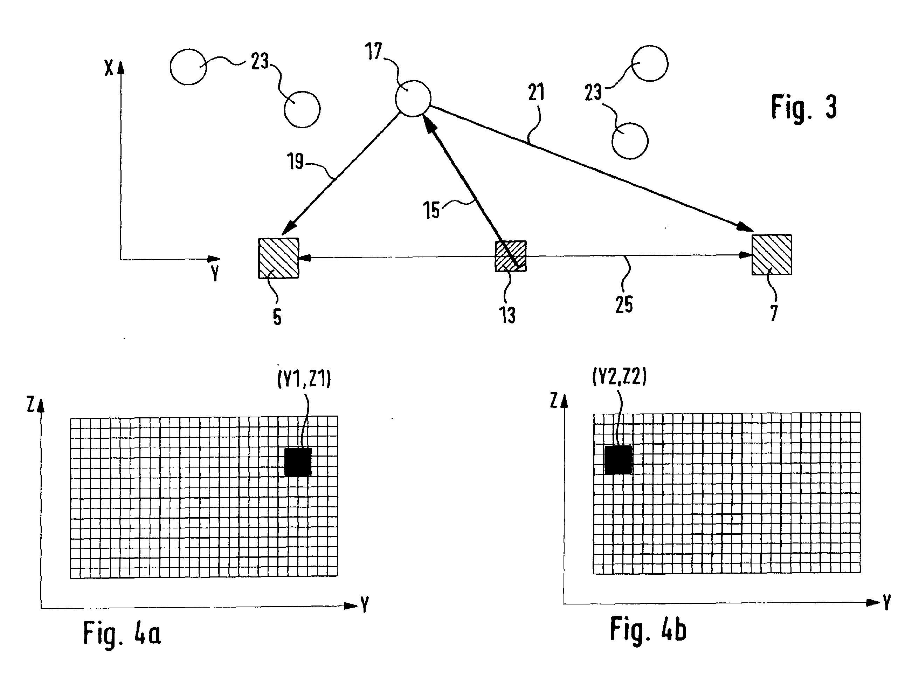

In Fig. 2 ist eine Draufsicht auf das erfindungsgemäße Kraftfahrzeug 1 dargestellt. Die Querachse des Kraftfahrzeugs 1 wird als Y-Achse bezeichnet.

Die erfindungsgemäße Vorrichtung weist im Heckbereich des Kraftfahrzeugs 1 einen ersten Sensor 5 und einen zweiten Sensor 7 auf. Der erste Sensor 5 bildet einen ersten Umfeldbereich 9 ab, während der zweite Sensor 7 einen zweiten Umfeldbereich 11 abbildet. Im Überschneidungsbereich des ersten und des zweiten Umfeldbereichs 9 und 11 können mit Hilfe der beiden von den Sensoren 5 und 7 aufgenommenen Bilder eine dreidimensionale Erfassung von Objekten erfolgen. Dieser Vorgang weist Parallelen zum menschlichen Sehen auf, bei dem auch mittels der zueinander beabstandeten Augen eine dreidimensionale Abbildung der Umgebung vorgenommen wird. In der Mitte zwischen erstem und zweitem Sensor 5 und 7 befindet sich eine Lichtquelle 13, welche mindestens einen gerichteten Lichtstrahl aussendet. Mit diesem Lichtstrahl wird das gesamte hinter dem Kraftfahrzeug 1 liegende Umfeld 3 abgetastet. Dieser Vorgang ist in Fig. 2 durch eine Vielzahl gerichteter Lichtstrahlen 15 angedeutet.

In Fig. 3 sind eine erfindungsgemäße Vorrichtung sowie mehrere Hindernisse in der Draufsicht dargestellt. Eine als IR-Laser ausgebildete Lichtquelle 13 emittiert einen Lichtstrahl 15, der auf ein Hindernis 17 trifft. Das Hindernis 17 reflektiert den Lichtstrahl 15, so dass zwei reflektierte Lichtstrahlen 19 und 21 auf den ersten Sensor 5 und den zweiten Sensor 7 treffen. Die anderen Hindernisse 23 im Umfeld 3 des Kraftfahrzeugs 1 werden in diesem Moment nicht erfasst.

Der erste Sensor 5 und der zweite Sensor 7 sind mit einem Abstand 25 zueinander angeordnet. Der erste und der zweite Sensor 5 und 7 können als sogenanntes "charge-coupled device" (CCD) ausgeführt sein. Dieses Halbleiterbauelement besteht aus vielen schachbrettartig angeordneten Zellen (Pixel). Unter Lichteinwirkung sammeln sich Elektronen in den Zellen des CCD-Chips, wobei die Zahl der Elektronen ein Maß für die Dauer und die Intensität des eingefallenen Lichtes ist. Vor einer Bildaufnahme werden zunächst die Elektronen in den Zellen gelöscht. Dann wird durch ein optisches System (Objektiv) ein Bild auf die Chipoberfläche projiziert. Nach einer bestimmten Zeit werden die Zellen ausgelesen und die jeweilige Anzahl der Elektronen gezählt. Damit ordnet man jedem einzelnen Pixel eine bestimmte Helligkeit zu. In Verbindung mit den jeweiligen Koordinaten der Pixel lässt sich aus diesen Werten ein digitalisiertes Bild berechnen.

In Fig. 4a und 4b sind die digitalisierten Bilder des Hindernisses 17 dargestellt. In der Fig. 4a sind die in der YZ-Ebene angeordneten Pixel des ersten Sensor 5 dargestellt. Im rechten oberen Bereich ist ein schwarzes Quadrat vorhanden, welches die Abbildung des Hindernisses 17 auf dem CCD ist. Das Hindernis 17 hat also aus Sicht des ersten Sensors 5 die Koordinaten (Y₁, Z₁).

In der Fig. 4b ist das Hindernis 17 bezüglich des zweiten Sensors 7 dargestellt. Die Pixel des zweiten Sensors 7 sind ebenfalls in der Y-Z-Ebene angeordnet. Bezüglich des zweiten Sensors 7 hat das Hindernis 17 die Koordinaten (Y₂, Z₂). Wenn der Abstand 25 zwischen erstem und zweiten Sensor bekannt ist, kann aus den Koordinaten (Y₁, Z₁) und (Y₂, Z₂) die Lage des Hindernisses 17 im Raum berechnet werden. Dies geschieht durch den Rechner der erfindungsgemäßen Vorrichtung.

Das heißt, mit Hilfe der erfindungsgemäßen Vorrichtung ist es möglich, ein dreidimensionales Abbild des Umfelds 3 des Kraftfahrzeugs 1 zu erhalten. Falls sich in diesem Umfeld eines oder mehrerer Hindernisse 17, 23 befinden, die das Kraftfahrzeug 1 möglicherweise beschädigen können, wird ein akustisches oder optisches Warnsignal von der Vorrichtung ausgesandt werden.

In der Fig. 3 ist nur ein einziger Lichtstrahl 15, der von der Lichtquelle 3 emittiert wird, dargestellt. Es ist erfindungsgemäß möglich, mit einem Lichtstrahl sequentiell das gesamte Umfeld des Kraftfahrzeugs abzutasten, so dass eventuell vorhandene Hindernisse 17, 23 nacheinander erkannt werden. Vorteilhaft an dieser Ausführungsform ist, dass jeweils nur wenige Bildpunkte des ersten und des zweiten Sensor 5 und 7 gleichzeitig ausgewertet werden müssen, was die erforderliche Rechenleistung verringert.

Es ist ebenso denkbar, mit mehreren, gleichzeitig emittierten Lichtstrahlen 15 zu arbeiten somit simultan im gesamten zu überwachenden Umfeld des Kraftfahrzeugs die Hindernisse 17, 23 zu detektieren. Damit ist eine schnellere Überwachung des Umfelds möglich, allerdings muss die Rechenleistung entsprechend höher sein. Es ist auch denkbar, die Lichtquelle 13 mit einer Lochmaske, die in der Zeichnung nicht dargestellt ist, zu umgeben, so dass auf einfache Weise eine Vielzahl gerichteter Lichtstrahlen 15 gleichzeitig von der Lichtquelle 13 emittiert werden können.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Vorrichtung zur Überwachung des Umfeldes (3) eines Kraftfahrzeugs (1), mit Sensoren zum Ermitteln des Abstands des Kraftfahrzeugs (1) von eventuellen Hindernissen, dadurch gekennzeichnet, dass mindestens zwei Sensoren (5, 7) die Umgebungshelligkeit örtlich aufgelöst abbilden, dass die Sensoren (5, 7) mit einem Abstand (25) zueinander angeordnet sind, dass eine Lichtquelle (13) mit mindestens einem gerichteten Lichtstrahl (15) vorhanden ist, die das Umfeld (3) des Kraftfahrzeugs abtastet, und dass ein Rechner zum Berechnen der Position von Hindernissen (17, 23) aus den Bildern der Sensoren (5, 7) vorhanden ist.

2. Vorrichtung nach Anspruch 1, dadurch gekennzeichnet, dass die Sensoren (5, 7) charge-coupled devices sind.

3. Vorrichtung nach einem der vorhergehenden Ansprüche, dadurch gekennzeichnet, dass ein optisches System im Strahlengang zwischen Sensor (5, 7) und Umfeld (3) angeordnet ist.

4. Vorrichtung nach einem der vorhergehenden Ansprüche, dadurch gekennzeichnet, dass die Lichtquelle (13) eine Lochmaske aufweist.

5. Vorrichtung nach einem der vorhergehenden Ansprüche, dadurch gekennzeichnet, dass die Lichtquelle (13) einen schrittmotorisch gesteuerten Spiegel aufweist, der mindestens einen gerichteten Lichtstrahl (15) der Lichtquelle (13) über das Umfeld (3) des Kraftfahrzeugs (1) steuert.

6. Vorrichtung nach einem der vorhergehenden Ansprüche, dadurch gekennzeichnet, dass die Lichtquelle (13) gepulstes Licht emittiert.

7. Vorrichtung nach einem der vorhergehenden Ansprüche, dadurch gekennzeichnet, dass die Lichtquelle (13) ein Laser, insbesondere ein IR-Laser, ist.

8. Vorrichtung nach einem der vorhergehenden Ansprüche, dadurch gekennzeichnet, dass die Relevanz von Hindernissen (17, 23) in Abhängigkeit der Fahrtrichtung und/oder des Lenkeinschlags des Kraftfahrzeugs (1) bewertet wird.

9. Vorrichtung nach einem der vorhergehenden Ansprüche, dadurch gekennzeichnet, dass die Relevanz von Hindernissen (17, 23) in Abhängigkeit des Beladungszustands des Kraftfahrzeugs (1) bewertet wird.

10. Vorrichtung nach einem der vorhergehenden Ansprüche, dadurch gekennzeichnet, dass ein Signal ausgegeben wird, wenn ein relevantes Hindernis (17) detektiert wurde.
